# EUROPEAN PATENT SPECIFICATION

(11) **EP 3 632 747 B1**
(45) Date of publication and mention of the grant of the patent: **28.04.2021**
(21) Application number: 18198454.3
(22) Date of filing: 03.10.2018
(51) Int. Cl.: B60R 11/04, B60S 1/56, B60R 1/12

(54) **A CAMERA ARRANGEMENT**
KAMERAANORDNUNG
AGENCEMENT DE CAMÉRA

(43) Date of publication of application: 08.04.2020
(73) Proprietor: Veoneer Sweden AB, 447 83 Vårgårda (SE)
(72) Inventor: Burza, Matthias, 583 31 Linköping (SE)
(74) Representative: Andersson, Per Rune

(56) References cited:
- WO-A1-2013/055263
- WO-A1-2017/048126
- DE-A1-102014 004 172
- DE-A1-102017 100 602
- US-A1- 2012 000 024

## Description

### DESCRIPTION OF THE DISCLOSURE

The present disclosure relates to a camera arrangement comprising an image capturing device and a lens defining an image plane for capturing an image in a direction defined by an optical path. The camera arrangement comprises a generally disc-shaped optical element and a cleaning unit for removing contaminants from at least one surface of said optical element.

Today, there exist different types of detection and sensor systems for road vehicles, by means of which various objects in the surroundings of a vehicle can be detected and analyzed. For this reason, such detection systems may comprise camera arrangements for capturing images and video sequences. Such camera arrangement can be used in connection with, for example, automated vehicle systems for speed control and collision prevention, and also in the field of autonomously driving vehicles.

According to prior technology, a camera arrangement can be arranged in a road vehicle, for example in a rear view mirror unit or inside the windshield of the vehicle. Such arrangement can be configured with a given detection area ahead of the vehicle or generally in any direction around the vehicle. The arrangement can be used for capturing images or video sequences, which can be analyzed by means of image treatment software in order to detect obstacles and for assisting a driver of the vehicle. Information related to such images or video sequences can also be used as input information in a computer system for an autonomously operated vehicle.

A problem which may arise in the above-mentioned field of technology is that certain components of the camera arrangement, typically a lens of an image capturing unit, may be contaminated by dirt, dust, water, insects and other substances. This may lead to a degradation of the image quality, which is a disadvantage. Consequently, there is a need to minimize or preferably eliminate such contamination of a camera arrangement in a vehicle.

A previously known camera arrangement of the above-mentioned type is known from the patent document US 2017/0240120. This document discloses an arrangement comprising a camera with a camera lens, a rotating lens cover and a cleaning device which is arranged for cleaning the lens cover at a position which is outside the field of view of the camera lens. Another prior art document, DE102017100602 A1, discloses a camera arrangement according to the preamble of claim 1.

Even though the arrangement according to US 2017/0240120 is configured for cleaning an optical element such as a rotating lens cover in a suitable manner, it can be noted that there is a need for further improvements within this field of technology. In particular, there is a demand for improvements in order to eliminate contaminants on an optical lens in a camera arrangement while maintaining a correct captured image without any distortion. There is also a demand for camera arrangements which are less sensitive to rain, wind and other environmental factors than previously known systems.

For the above-mentioned reasons, it is an object of the present disclosure to provide a camera arrangement by means of which the above-mentioned advantages can be obtained.

In accordance with the disclosure, said object is achieved by means of a camera arrangement defined by the features of claim 1.

Certain advantages are obtained by means of the present disclosure. Firstly, the camera arrangement according to the disclosure can be used to remove contaminants on an optical lens in an improved manner. Also, the camera arrangement is configured to maintain a correct image capturing process without any distortion. Also, the camera arrangement according to the disclosure is less sensitive to rain, wind and other environmental factors. In particular, the arrangement involving the above-mentioned first angle α and second angle β is advantageous since the lens of the camera arrangement is not exposed to a direct stream of air acting on a vehicle. In this manner, the lens can be kept clean.

The camera arrangement according to the disclosure is suitably used with a car, truck or other road vehicle, but can also in principle be used with any other vehicle having a need for a camera arrangement for capturing images or video sequences in the vicinity of the vehicle.

Other aspects of the present disclosure are disclosed in the dependent claims.

According to the invention, each of said first angle and said second angle is within the interval 25°-65°.

According to some aspects, the cleaning unit is configured so as to provide cleaning of said optical element outside of said optical path.

According to some aspects, the optical element is constituted by a mirror which is configured for reflecting said image and guiding it towards the image capturing device.

According to some aspects, the optical element is constituted by a rotating mirror disc which is moved in relation to a stationary cleaning unit which is configured for providing said cleaning of the optical element.

According to some aspects, the camera arrangement comprises a motor for rotating said mirror disc in relation to said cleaning unit.

According to some aspects, the optical path is generally parallel with the direction of the image plane.

According to some aspects, the optical element is constituted by a generally transparent window covering said image capturing device and allowing said image to reach the image capturing device.

According to some aspects, the optical element is constituted by a rotating window element which is moved in relation to a stationary cleaning unit while cleaning said window element.

According to some aspects, the camera arrangement comprises a motor for rotating said window element in relation to said cleaning unit.

According to some aspects, the optical element is constituted by a fixed window and the cleaning unit is configured for moving in relation to said fixed window during cleaning.

According to some aspects, the camera arrangement comprises a motor for displacing said cleaning unit in relation to said window during cleaning.

According to some aspects, the optical path is generally perpendicular in relation to the direction of the image plane.

According to some aspects, said image capturing device and said lens are accommodated within a housing.

According to some aspects, the camera arrangement is configured for guiding cooling air towards the image capturing device.

According to some aspects, the camera arrangement according to claim 12 is provided with an air filter for cleaning air being guided towards the image capturing device.

### BRIEF DESCRIPTION OF THE DRAWINGS

The present disclosure will now be described more in detail with reference to the appended drawings, where:
- Figure 1: shows a perspective view of a rear view mirror unit which is intended to be used in a vehicle;
- Figure 2: is a top view of said rear view mirror unit along a generally horizontal cross-section through said unit and in accordance with an embodiment of the present disclosure;
- Figure 3: shows, in a schematical manner, the general principles of the embodiment according to Figure 2;
- Figure 4: is a top view of a rear view mirror unit generally corresponding to Figure 2 but showing a further embodiment of the disclosure; and
- Figure 5: shows, in a schematical manner, the general principles of the embodiment according to Figure 4.

### DETAILED DESCRIPTION

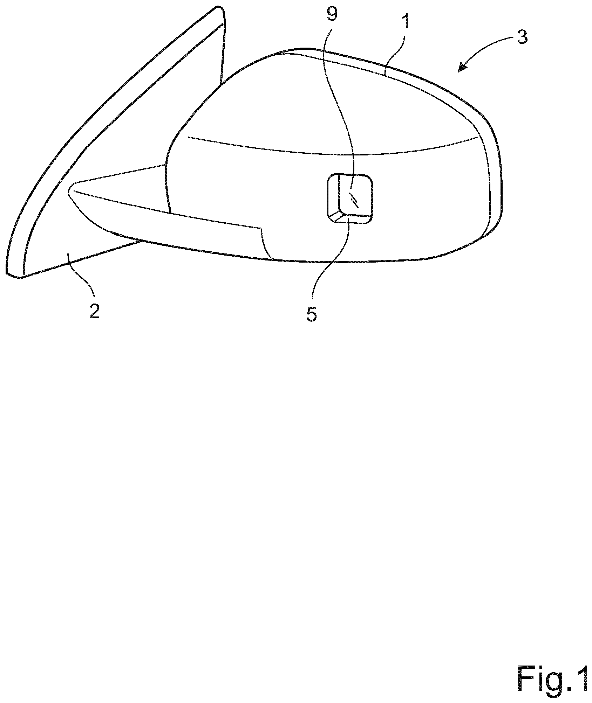

Figure 1 shows in a schematical manner a perspective view of a rear view mirror unit 1 which is intended to be mounted on a side section of a vehicle 2, for example a road vehicle such as a regular car or truck. This is generally known as such.

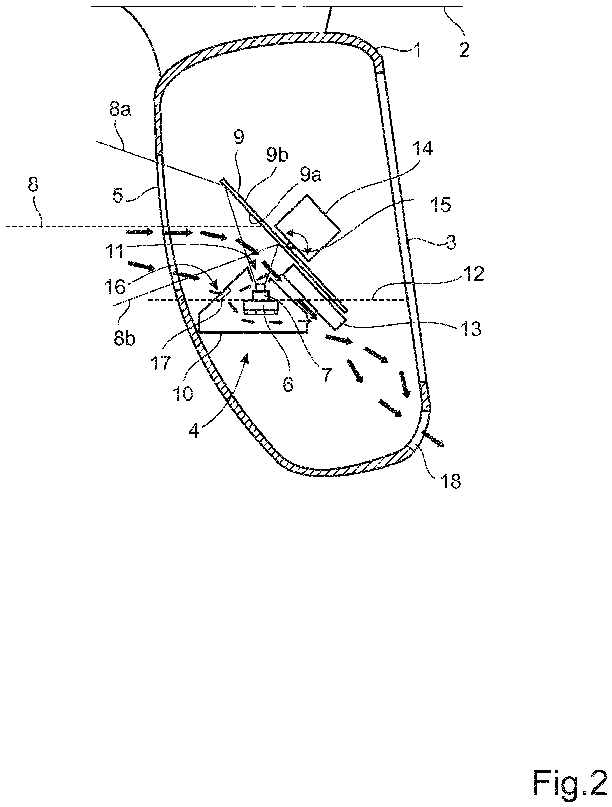

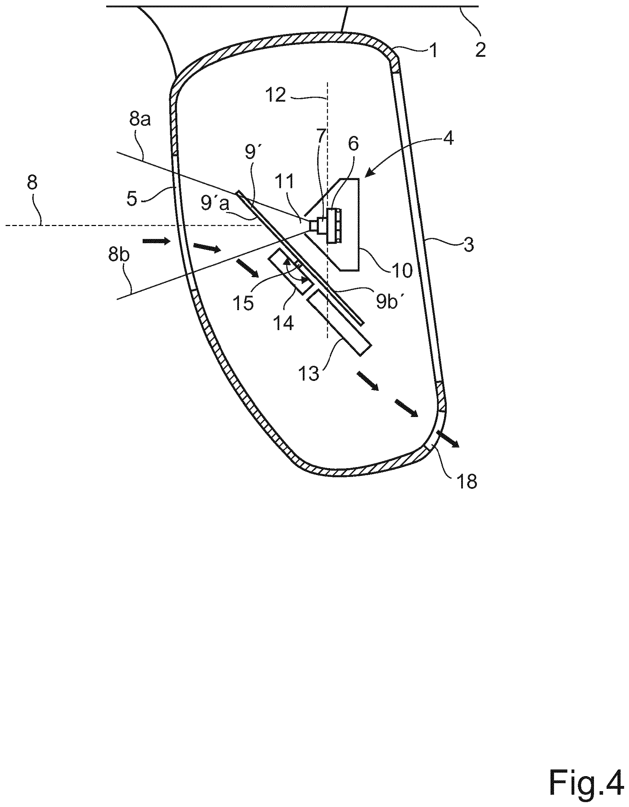

According to known technology, the rear view mirror unit 1 is provided with a conventional rear view mirror 3 (not visible in Figure 1 but shown in Figures 2 and 4). According to an embodiment, which is shown with reference to Figure 1 in combination with Figure 2, the disclosure relates to a camera arrangement 4 which is arranged inside the rear view mirror unit 1 and which is configured for capturing images or video sequences of objects in the vicinity of the vehicle 2. For this purpose, the rear view mirror unit 1 is provided with a first opening 5 for allowing a clear view in a forwards direction of the vehicle 2.

In the following, the term "image" should be interpreted as meaning either a still image or a sequence of images corresponding to a video signal.

The camera arrangement 4, as shown in detail in Figure 2, is based on an image capturing device 6 and an associated lens 7.

An image can be captured by the image capturing device 6 due to the fact that an optical path 8 is defined by a predefined field of view, as indicated by reference numerals 8a, 8b which correspond to limitations of said field of view as defined generally by the dimensions of the first opening 5. The optical path 8 shown is indicated as a generally straight line which extends into the first opening 5 in the rear view mirror unit 1 and towards an optical element 9 which according to an embodiment is in the form of a generally circular and reflective mirror disc. According to an embodiment, the optical path 8 as shown in Figure 2 describes a generally straight direction extending within the field of view as defined by its limitations 8a, 8b, i.e. so that the optical path 8 is confined within said limitations 8a, 8b. Although not shown in Figure 2, the direction of the optical path 8, and a corresponding field of view, may vary both in a horizontal and a vertical dimension.

It should be noted that the optical element 9 is partly shown through the opening 5 as indicated in Figure 1. Furthermore, with reference to Figures 1 and 2, the optical element 9 comprises a first surface 9a, which faces the first opening 5, the exterior of the rear view mirror unit 1 and the optical path 8, and also a second, opposite surface 9b which is a reverse side of the optical element 9 and which does not have to be reflective.

Furthermore, the image capturing device 6 and the lens 7 are positioned inside a housing 10 which is located within the rear view mirror unit 1. The housing 10 is generally box-like and is formed with a second opening 11 through which the image capturing device 6 has a clear view towards the first surface 9a of the optical element 9.

An image, which can be viewed through the first opening 5, can be reflected by the first surface 9a and can then reach the image capturing device 6 via the lens 7. In order to provide a high level of reflectivity by the optical element 9, it is suitably manufactured from reflective glass or a similar material.

An image can be said to be captured in a manner so as to define an image plane 12, which is schematically shown with a broken line in Figure 2. As indicated, an incoming image is defined by the direction represented by the optical path 8 and reaches the lens 7 and image capturing device 6 - after being reflected in the first surface 9a of the optical element 9 - in a generally perpendicular direction with reference to the image plane 12.

The vehicle 2 can be expected to be operated so as to move forwards at a particular speed. This means that the rear view mirror unit 1 will also move forwards, which leads to a situation in which a relatively high stream of air will act on the rear view mirror unit 1. This stream of air will enter the first opening 5 and reach the first surface 9a of the optical element 9. This means that certain contaminants, for example in the form of dust, water, insects etc., will reach the first surface 9a and form a coating of contaminants on the first surface 9a. This type of contamination is obviously unwanted since it may distort the images which are captured by the image capturing device 6.

In order to mitigate the above-mentioned problem and remove any contaminants on the first surface 9a, the camera arrangement 4 is provided with a cleaning unit 13 which is arranged for cleaning at least the first surface 9a. According to an embodiment, this can be done by forming the cleaning unit 13 as a brush which is in contact with the first surface 9a, and also by arranging the optical element 9 so that it moves in relation to the cleaning unit 13. As shown in the embodiment of Figure 2, the optical element 9 is for this reason generally disc-shaped and can be rotated by means of a motor 14 having a rotating motor shaft 15 which is connected to the optical element 9.

When the camera arrangement 4 is operated, the image capturing device 6 will capture single images or a streaming video signal corresponding to a view ahead of the rear view mirror unit 1. The image will be reflected in the first surface 9a of the optical element 9 and will then reach the lens 7 and the image capturing device 6. During this process, the cleaning unit 13 will continuously remove contaminants from the first surface 9a while the optical element 9 is rotated by means of the motor 14. In this manner, the contaminants can be eliminated.

According to the embodiment shown in Figure 2, the rotating optical element 9 will be exposed to an airstream while providing simultaneous image capturing and removal of contaminants. However, the lens 7 is not exposed to the direct airstream due to its position within the housing 10. This means that the lens 7 is maintained in a protected position with regard to the airstream, which is an advantage.

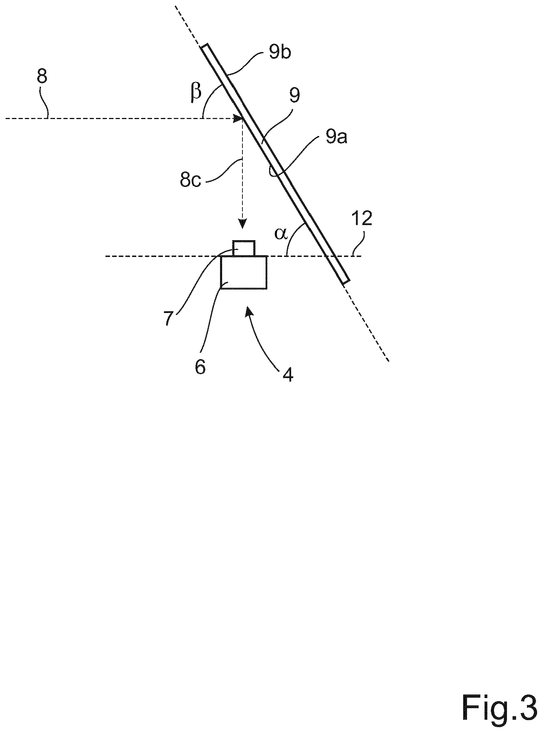

As shown in Figure 3, which is a simplified schematical view of the camera arrangement 4 and the optical element 9, it can be noted that the optical element 9 is arranged so that it defines a first angle α with regard to the image plane 12. Also, the camera arrangement 4 is configured so that the optical element 9 defines a second angle β with regard to the optical path 8. For reasons of simplicity, the optical path 8 is here shown as a straight line of view which extends towards the optical element 9 and is reflected by the first surface 9a, thereby defining a reflected optical path 8c. The embodiment shown in Figures 2 and 3 is furthermore, configured so that the image plane 12 is generally parallel to the incoming optical path 8, i.e. before it is reflected in the first surface 9a. This means that the first angle α is generally of the same magnitude as the second angle β. However, the present disclosure is not limited to this embodiment only, but also cover embodiments in which the first angle α is of a magnitude which differs from the second angle β.

The optical element 9 is arranged to be rotated by means of a motor unit 14 and is also associated with a cleaning unit 13 which according to certain embodiments can be in the form of a brush or a similar device, which moves along the first surface 9a (during rotation of the optical element disc 9) so as to brush or scrape off contaminants such as liquids, dust, insects or similar from the first surface 9a.

Furthermore, the cleaning unit 13 is positioned in a manner so as to provide cleaning of the mirror disc 9 outside of the optical path 8, as shown in particular in Figure 2. This is an advantage since the cleaning process does not obstruct or distort the image capturing process.

As shown in Figure 2, the housing 10 of the camera arrangement 4 is provided with a second opening 11 which faces the first surface 9a and which is configured in the housing 10 in a manner so that the incoming stream of air does not enter said second opening 11 and reach the image capturing device 6 and the lens 7. This means that contaminants and unwanted particles in the stream of air are prevented from entering the housing 10 via the second opening 11 and streaming towards the front of lens 7. This means that the operation of the lens 7 will not be distorted by the stream of air.

Also, the housing 10 is provided with a third opening 16 which is intended for allowing a stream of air to enter the interior of the housing 10. The purpose of this arrangement is to allow a stream of air to cool the image capturing unit 6, i.e. to absorb heat which can be expected to be generated by the image capturing device 6 during operation. According to an embodiment, this flow of cooling air is directed towards the side of the image capturing device 6 as shown in Figure 2.

According to an embodiment, also shown in Figure 2, the housing 10 is equipped with an air filter 17 which is positioned at the third opening 16. The purpose of the air filter 17 is to clean the incoming air entering the housing 10 via the third opening 16. This means that the stream of air which enters the interior of the rear view mirror unit 1 will be used to cool the camera arrangement 4 after being filtered in the air filter 17.

The air which has been forced into the housing 10, and which streams inside and around the housing 10, is eventually forced past the housing 10 and the cleaning unit 13. Furthermore, the streaming air is guided out of the rear view mirror unit 1 via a fourth opening 18.

In summary, the disclosure relates to a camera arrangement 4 which comprises an image capturing device 6 and a lens 7 which defines an image plane 12 for capturing an image. The camera arrangement 4 comprises a generally disc-shaped optical element 9 for defining an optical path 8 for said image. The arrangement 4 also comprises a cleaning unit 13 for removing contaminants from at least one surface 9a of the optical element 9. According to this embodiment, the cleaning unit 13 is positioned and configured so as to provide cleaning of said optical element 9 outside of said optical path 8 which defines the direction, or the field of view, of the image captured by the camera arrangement 4.

The optical element 9 acts as a mirror for an incoming image. In this manner, the image first is reflected in the optical element 9 and can then be captured by the image capturing device 6.

Furthermore, as shown in particular with reference to Figure 3, which is a simplified view showing the main principles of the camera arrangement 4, the camera arrangement 4 is configured so that the optical element 9 is inclined with a first angle α with regard to the image plane 12 and that the optical element 9 is also inclined with a second angle β with regard to the optical path 8. Such an arrangement is an advantage since the lens 7 is not exposed to the direct stream of air through the first opening. This contributes to keeping the lens 7 clean. A further advantage is that the incoming stream of air will be guided partly by the optical element 9 and so as to be guided past the camera arrangement 4.

According to an embodiment of the disclosure, each one of the first angle α and the second angle β is within the interval 25°-65°. The magnitude of the first angle α and the second angle β, respectively, may differ from each other. In such cases, the optical path 8 and the direction of the image plane 12 are not parallel.

The use of an optical element 9 in the form of a mirror allows for a broad spectral working range, from infrared to ultraviolet radiation. Consequently, the camera arrangement 4 as shown in Figure 2 is a single solution which can be used for example for night vision as well as visible imaging systems.

It should be noted that the images or video sequences being captured by means of the camera arrangement 4 can be further analyzed and treated by means of computer software in external computer systems. Data corresponding to the captured images can also be transmitted wirelessly from the image capturing device 6 to such external computer systems. Such arrangements and methods for data transmission and image treatment are as such previously known and are not described in any detail here.

As indicated above, the optical element 9 shown in Figures 2 and 3 is a mirror which is configured for reflecting an image and guiding it towards the image capturing device 6. In particular, the optical element 9 may be a rotating mirror disc which is moved in relation to the cleaning unit 13, which is stationary and which is arranged for providing the cleaning of the optical element 9.

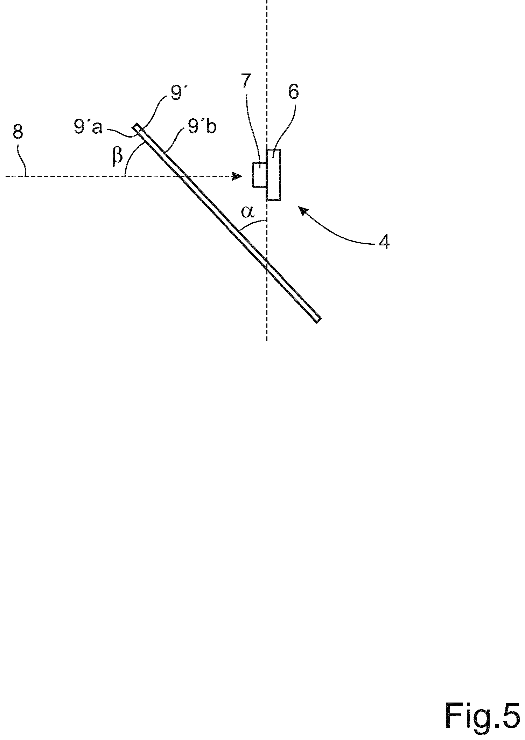

Figure 4 discloses a further embodiment of the present disclosure. This embodiment is based on a rear view mirror unit 1 with a conventional rear view mirror 3 and with a camera arrangement 4 of generally the same design as the embodiment shown in Figure 2, however with the distinction that the camera arrangement 4 in Figure 4 is arranged in a rotational position so that the image capturing device 6 and the lens 7 are directed towards the first opening 5 and towards the forwards direction of the vehicle 2. This means that the image plane 12 shown in Figure 4 is generally perpendicular to the incoming image and to the optical path 8 within a field of view as indicated by means of reference numerals 8a, 8b. This is also schematically described in Figure 5.

An image, alternatively a video sequence, can be captured by the image capturing device 6 through the fact that an optical path 8, i.e. corresponding to a field of view, is defined by means of the first opening 5 in the rear view mirror unit 1, said optical path 8 extending towards an optical element 9' which according to the embodiment of Figure 4 is in the form of a generally transparent disc, suitably made of transparent glass or a similar material. The position of the optical element 9' in Figure 4 corresponds to that of the optical element 9 as partly shown through the opening 5 in Figure 1.

In the same manner as Figure 2, the camera arrangement 4 of Figure 4 is positioned inside the housing 10 which is located within the rear view mirror unit 1. The housing 10 is generally box-like and is formed with a second opening 11 through which the image capturing device 6 has a view through the optical element 9'. The optical element 9' has a first surface 9a', facing the exterior of the rear view mirror unit 1, and a second surface 9b', facing the camera arrangement 4.

An image, which can be viewed through the first opening 5, will reach the image capturing device 6 via the lens 7. In order to provide a high transmission by the optical element 9', it is suitably manufactured from transparent glass or a similar material.

An image is captured in a manner so as to define an image plane 12, which is schematically shown with a broken line in Figure 4. As indicated, the incoming image is defined by the optical path 8 and reaches the lens 7 and image capturing device 6 generally perpendicular to the image plane 12.

In contrast to the embodiment in Figure 2, the embodiment shown in Figure 4 is not based on the fact that an incoming image is reflected in the optical element 9'. Instead, the optical element 9' is transparent so as to let through the image. Also, contaminants are prevented from reaching the lens 7 due to the fact that the optical element 9' is positioned between the second opening 11 and the first opening 5, as shown in Figure 4.

In a manner which corresponds to Figure 2, it can be noted that certain contaminants, for example in the form of dust, water, insects etc., will cover the first surface 9a' at least partly during operation. All such contaminants are unwanted since they distort the images which are captured by the image capturing device 6.

In order to remove any contaminants on the first surface 9a', the camera arrangement 4 is provided with a cleaning unit 13 which is arranged for cleaning at least the first surface 9a'. This can be done by forming the cleaning unit 13 as a brush which is in contact with the first surface 9a' and by arranging the optical element 9' so that it moves in relation to the cleaning unit 13. For this reason, the optical element 9' is generally disc-shaped and is being rotated by means of a motor 14 having a motor shaft 15 which is connected between the motor 14 and the optical element 9'.

When the camera arrangement 4 is operated, the image capturing device 6 will capture single images or a streaming video signal corresponding to a view which is located ahead of the rear view mirror unit 1. The image will be transmitted through the optical element 9' and will then reach the lens 7 and the image capturing device 6. During this process, the cleaning unit 13 will continuously remove contaminants from the first surface 9a' while the optical element 9 is rotated. According to an embodiment, the optical element 9 is rotated with a number of revolutions per minute while the camera arrangement 4 is operated, for example 5-20 revolutions per minute. The disclosure is however not limited to this particular rotational speed of the optical element 9.

The embodiment shown in Figure 4 may be arranged so that the optical element 9' is inclined with a first angle α in relation to the image plane 12 and also so that the optical element 9' is inclined with a second angle β in relation to the optical path 8. According to an embodiment, each one of the first angle α and the second angle β is within the interval 25°-65°. It should be noted that the first angle α and the second angle β need not be of the same magnitude.

Furthermore, the optical element 9' is continuously cleaned while the incoming stream of air is deflected along the first surface 9a' and then guided out of the rear view mirror unit 1 via the third opening 18, as shown in Figure 4. The fact that the optical element 9' is positioned with the above-mentioned angles α, β is beneficial in order to reduce wind resistance, which is an advantage. Also, it should be noted that the cleaning unit 13 is arranged in a manner so that the optical element 9' is cleaned outside of the optical path 8.

According to an embodiment which is an alternative to the one shown in Figures 4 and 5, the optical element can be maintained fixed, i.e. non-rotating. In such case the cleaning unit can be arranged so as to be moved back and forth along generally the entire first surface 9a', or at least a part of the first surface 9a' through which it can be expected that an image will be captured.

The disclosure is not limited to the embodiments described above. For example, a camera arrangement as described above can be arranged behind a front grill of a vehicle, which is a position where a high amount of insects and dirt will be collected, and where the camera arrangement is exposed to a direct air stream. In such position also, the camera arrangement can be used to remove contaminants, as described above.

Furthermore, the disclosure may relate to different types of vehicles and also different types of a camera units.

## Claims

1. A camera arrangement (4) comprising an image capturing device (6) and a lens (7) defining an image plane (12) for capturing an image in a direction defined by an optical path (8), said camera arrangement (4) comprising: a generally disc-shaped optical element (9;9') and a cleaning unit (13) for removing contaminants from at least one surface (9a; 9a') of said optical element (9; 9'), **characterized in that** the optical element (9; 9') is inclined with a first angle (α) in relation to said image plane (12) and that the optical element (9; 9') is inclined with a second angle (β) in relation to said optical path (8), wherein each of said first angle (α) and said second angle (β) is within the interval 25°-65°.

2. A camera arrangement (4) according to claim 1, wherein said cleaning unit (13) is configured so as to provide cleaning of said optical element (9; 9') outside of said optical path (8),

3. A camera arrangement (4) according to any one of claims 1 or 2, wherein the optical element (9) is constituted by a mirror which is configured for reflecting said image and guiding it towards the image capturing device (6).

4. A camera arrangement (4) according to claim 3, wherein the optical element (9) is constituted by a rotating mirror disc (9) which is moved in relation to a stationary cleaning unit (13) which is configured for providing said cleaning of the optical element (9).

5. A camera arrangement (4) according to claim 3, wherein it comprises a motor (14) for rotating said mirror disc (9) in relation to said cleaning unit (13).

6. A camera arrangement (4) according to any one of the preceding claims, wherein the optical path (8) is generally parallel with the direction of the image plane (12).

7. A camera arrangement (4) according to any one of claims 1 or 2, wherein the optical element (9') is constituted by a generally transparent window covering said image capturing device (6) and allowing said image to reach the image capturing device (6).

8. A camera arrangement (4) according to claim 7, wherein the optical element (9') is constituted by a rotating window element (9') which is moved in relation to a stationary cleaning unit (13) while cleaning said window element (9').

9. A camera arrangement (4) according to claim 8, wherein it comprises a motor (14) for rotating said window element (9') in relation to said cleaning unit (13).

10. A camera arrangement (4) according to claim 1, wherein the optical element (9') is constituted by a fixed window and wherein the cleaning unit (13) is configured for moving in relation to a surface of said fixed window (9') during cleaning.

11. A camera arrangement (4) according to claim 10, wherein it comprises a motor (14) for displacing said cleaning unit (13) in relation to said window (9') during cleaning.

12. A camera arrangement (4) according to any one of claims 7-11, wherein the optical path (8) is generally perpendicular in relation to the direction of the image plane (12).

13. A camera arrangement (4) according to any one of the preceding claims, wherein said image capturing device (6) and said lens (7) are accommodated within a housing (10).

14. A camera arrangement (4) according to claim 1-6, wherein it is configured for guiding cooling air towards the image capturing device (6).

15. A camera arrangement (4) according to claim 14, wherein it provided with an air filter (17) for cleaning air being guided towards the image capturing device (6).

## Patentansprüche

1. Kameraanordnung (4), die eine Bilderfassungsvorrichtung (6) und eine Linse (7) umfasst, die eine Bildebene (12) zum Erfassen eines Bildes in einer durch einen optischen Pfad (8) definierten Richtung definieren, wobei die Kameraanordnung (4) Folgendes umfasst: ein im Allgemeinen scheibenförmiges optisches Element (9; 9') und eine Reinigungseinheit (13) zum Entfernen von Verunreinigungen von mindestens einer Oberfläche (9a; 9a') des optischen Elements (9; 9'), **dadurch gekennzeichnet, dass** das optische Element (9; 9') in einem ersten Winkel (α) in Bezug auf die Bildebene (12) geneigt ist und dass das optische Element (9; 9') in einem zweiten Winkel (β) in Bezug auf den optischen Pfad (8) geneigt ist, wobei der erste Winkel (α) und der zweite Winkel (β) jeweils innerhalb des Intervalls 25° bis 65° liegen.

2. Kameraanordnung (4) nach Anspruch 1, wobei die Reinigungseinheit (13) konfiguriert ist, um eine Reinigung des optischen Elements (9; 9') außerhalb des optischen Pfads (8) bereitzustellen,

3. Kameraanordnung (4) nach einem der Ansprüche 1 oder 2, wobei das optische Element (9) durch einen Spiegel gebildet ist, der konfiguriert ist, um das Bild zu reflektieren und zu der Bilderfassungsvorrichtung (6) zu leiten.

4. Kameraanordnung (4) nach Anspruch 3, wobei das optische Element (9) durch eine rotierende Spiegelscheibe (9) gebildet ist, die in Bezug auf eine stationäre Reinigungseinheit (13) bewegt wird, die zum Bereitstellen der Reinigung des optischen Elements (9) konfiguriert ist.

5. Kameraanordnung (4) nach Anspruch 3, wobei sie einen Motor (14) zum Drehen der Spiegelscheibe (9) in Bezug auf die Reinigungseinheit (13) umfasst.

6. Kameraanordnung (4) nach einem der vorhergehenden Ansprüche, wobei der optische Pfad (8) im Allgemeinen parallel zur Richtung der Bildebene (12) ist.

7. Kameraanordnung (4) nach einem der Ansprüche 1 oder 2, wobei das optische Element (9') durch ein im Allgemeinen transparentes Fenster gebildet ist, das die Bildaufnahmevorrichtung (6) abdeckt und ermöglicht, dass das Bild die Bildaufnahmevorrichtung (6) erreicht.

8. Kameraanordnung (4) nach Anspruch 7, wobei das optische Element (9') durch ein rotierendes Fensterelement (9') gebildet ist, das in Bezug auf eine stationäre Reinigungseinheit (13) bewegt wird, während es das Fensterelement (9') reinigt.

9. Kameraanordnung (4) nach Anspruch 8, wobei sie einen Motor (14) zum Drehen des Fensterelements (9') in Bezug auf die Reinigungseinheit (13) umfasst.

10. Kameraanordnung (4) nach Anspruch 1, wobei das optische Element (9') durch ein festes Fenster gebildet ist und wobei die Reinigungseinheit (13) zum Bewegen in Bezug auf eine Oberfläche des festen Fensters (9') während des Reinigens konfiguriert ist.

11. Kameraanordnung (4) nach Anspruch 10, wobei sie einen Motor (14) zum Verschieben der Reinigungseinheit (13) in Bezug auf das Fenster (9') während der Reinigung umfasst.

12. Kameraanordnung (4) nach einem der Ansprüche 7 bis 11, wobei der optische Pfad (8) im Allgemeinen senkrecht in Bezug auf die Richtung der Bildebene (12) ist.

13. Kameraanordnung (4) nach einem der vorhergehenden Ansprüche, wobei die Bildaufnahmevorrichtung (6) und die Linse (7) in einem Gehäuse (10) untergebracht sind.

14. Kameraanordnung (4) nach Anspruch 1 bis 6, wobei sie zum Leiten von Kühlluft in Richtung der Bilderfassungsvorrichtung (6) konfiguriert ist.

15. Kameraanordnung (4) nach Anspruch 14, wobei sie mit einem Luftfilter (17) versehen ist zum Reinigen von Luft, die zu der Bilderfassungsvorrichtung (6) geleitet wird.

## Revendications

1. Agencement de caméra (4) comprenant un dispositif de capture d'image (6) et une lentille (7) définissant un plan d'image (12) pour capturer une image dans une direction définie par une trajectoire optique (8), ledit agencement de caméra (4) comprenant : un élément optique généralement en forme de disque (9 ; 9') et une unité de nettoyage (13) pour éliminer les contaminants d'au moins une surface (9a ; 9a') dudit élément optique (9 ; 9'), **caractérisé en ce que** l'élément optique (9 ; 9') est incliné selon un premier angle (α) par rapport audit plan d'image (12) et **en ce que** l'élément optique (9 ; 9') est incliné selon un deuxième angle (β) par rapport à ladite trajectoire optique (8), dans lequel chacun dudit premier angle (α) et dudit deuxième angle (β) est dans l'intervalle de 25 ° à 65 °C.

2. Agencement de caméra (4) selon la revendication 1, dans lequel ladite unité de nettoyage (13) est configurée de manière à assurer le nettoyage dudit élément optique (9 ; 9') à l'extérieur de ladite trajectoire optique (8),

3. Agencement de caméra (4) selon l'une quelconque des revendications 1 ou 2, dans lequel l'élément optique (9) est constitué par un miroir qui est configuré pour réfléchir ladite image et la guider vers le dispositif de capture d'image (6).

4. Agencement de caméra (4) selon la revendication 3, dans lequel l'élément optique (9) est constitué par un disque de miroir rotatif (9) qui est déplacé par rapport à une unité de nettoyage fixe (13) qui est configurée pour assurer ledit nettoyage de l'élément optique (9).

5. Agencement de caméra (4) selon la revendication 3, dans lequel il comprend un moteur (14) pour faire tourner ledit disque de miroir (9) par rapport à ladite unité de nettoyage (13).

6. Agencement de caméra (4) selon l'une quelconque des revendications précédentes, dans lequel la trajectoire optique (8) est généralement parallèle à la direction du plan d'image (12).

7. Agencement de caméra (4) selon l'une quelconque des revendications 1 ou 2, dans lequel l'élément optique (9') est constitué d'une fenêtre généralement transparente recouvrant ledit dispositif de capture d'image (6) et permettant à ladite image d'atteindre le dispositif de capture d'image (6).

8. Agencement de caméra (4) selon la revendication 7, dans lequel l'élément optique (9') est constitué par un élément de fenêtre rotatif (9') qui est déplacé par rapport à une unité de nettoyage fixe (13) pendant le nettoyage dudit élément de fenêtre (9').

9. Agencement de caméra (4) selon la revendication 8, **caractérisé en ce qu'**il comprend un moteur (14) pour faire tourner ledit élément de fenêtre (9') par rapport à ladite unité de nettoyage (13).

10. Agencement de caméra (4) selon la revendication 1, dans lequel l'élément optique (9') est constitué par une fenêtre fixe et dans lequel l'unité de nettoyage (13) est configurée pour se déplacer par rapport à une surface de ladite fenêtre fixe (9') pendant le nettoyage.

11. Agencement de caméra (4) selon la revendication 10, dans lequel il comprend un moteur (14) pour déplacer ladite unité de nettoyage (13) par rapport à ladite fenêtre (9') pendant le nettoyage.

12. Agencement de caméra (4) selon l'une quelconque des revendications 7 à 11, dans lequel la trajectoire optique (8) est généralement perpendiculaire à la direction du plan d'image (12).

13. Agencement de caméra (4) selon l'une quelconque des revendications précédentes, dans lequel ledit dispositif de capture d'image (6) et ladite lentille (7) sont logés dans un boîtier (10).

14. Agencement de caméra (4) selon la revendication 1 à 6, dans lequel il est configuré pour guider de l'air de refroidissement vers le dispositif de capture d'image (6).

15. Agencement de caméra (4) selon la revendication 14, dans lequel il est muni d'un filtre à air (17) pour nettoyer de l'air étant guidé vers le dispositif de capture d'image (6).
